# EUROPEAN PATENT SPECIFICATION

(11) **EP 2 682 014 B1**
(45) Date of publication and mention of the grant of the patent: **15.04.2015**
(21) Application number: 13172525.1
(22) Date of filing: 18.06.2013
(51) Int. Cl.: A42B 3/30

(54) **Microphone mounting device and open-face helmet**
Mikrofonbefestigungsvorrichtung und Open-Face-Helm
Dispositif de montage de microphone et casque semi-intégral

(30) Priority: 02.07.2012 JP 2012148908
(43) Date of publication of application: 08.01.2014
(73) Proprietor: Arai Helmet Ltd, Saitama-shi, Saitama-ken (JP)
(72) Inventor: Arai, Michio, Saitama-ken (JP)
(74) Representative: Tomkinson, Alexandra

(56) References cited:
- EP-A1- 0 062 163
- EP-A1- 1 099 390
- EP-A1- 1 317 888
- CA-A1- 936 921

## Description

### FIELD OF THE INVENTION

The present invention relates to a microphone mounting device equipped for an open-face helmet and the open-face helmet, worn by drivers of various types of vehicles such as automobiles and motorcycles, vessels such as motor boats, as well as other transportation means such as bicycles.

### BACKGROUND OF THE INVENTION

There are known in the art a microphone equipped for an open-face helmet (Hereinafter, "MIC"), as described below in the Patent Literature 1, comprising clips clamped to the helmet shell of the open-face helmet, a flexible tube attached to the clips, a MIC body attached to the flexible tube and lines inserted into the flexible tube and wired over the MIC body and connection terminals.

### DESCRIPTION OF THE RELATED ART

As related art literature information relevant to the present invention, we note Japanese laid-open Patent Publication No. 2002-27069 [Patent literature 1]. CA936921 discloses a helmet adapted for two-way radio communication. The helmet includes a pivoted arm supporting a microphone for displacement between a lowered position close to the mouth of a wearer and an elevated position in resting engagement with a forehead portion of the helmet.

### SUMMARY OF THE INVENTION

According to the prior art in the Patent literature 1, a helmet may equip with a MIC by clips clamped to the helmet, and further may site the MIC body at a preferred position by deforming a flexible tube.

However, in the prior art of the Patent literature 1, the body may be moved out of the arranged position by displaced clips or flexible tube by wind or shake during driving or careless touch on the MIC with a hand or a shoulder, or MIC may not properly take voice input because the clips slip off and the MIC drops from the helmet.

The present invention addresses to such the issues and they are some of the objects to be solved. Specifically, the present invention objects to preventing a MIC from misalignment or drop caused by wind or shake during driving or by careless touch on the MIC with a hand or a shoulder, thereby, properly taking voice input from MIC, and so forth.

To achieve such the objects, a mounting device of a microphone and an open-face helmet at least comprise the following in the present invention.

According to the present invention there is provided a microphone mounting device for mounting a microphone around the mouth of a wearer of an open-face helmet, wherein the mounting device is arranged so as to cover from around the mouth to one or both of the left and right sides of a helmet shell configuring the outmost layer of the open-face helmet, characterized in that the mounting device is formed from a foamed synthetic resin material generating repulsive resistance against deforming stress and having deformation function for the wearer such that the wearer can bend and deform it by hand and it returns to an original shape on hand release by the wearer.

Preferably, the mounting device provides a mounting part to mount the microphone around the mouth, a supporting part supported at one or both sides of the left and right sides of the helmet shell and an arm part to connect the mounting part with the supporting part, wherein the mounting part, the supporting part and the arm part are integrally formed.

There is a mounting device of a microphone which provides a mounting part to mount a microphone around the mouth of a wearer of an open-face helmet, a supporting part supported at one or both sides of the left and right sides of a helmet shell configuring the outmost layer of the helmet and an arm part arranged between the mounting part and the supporting part. The mounting part, the supporting part, and the arm part are formed with materials generating repulsive resilience against deforming stress, and covered with foamed synthetic resin materials having deformation function for the wearer and suppleness so as to integrate the mounting part, supporting part and the arm part.

Preferably, the supporting part is supported by a base plate, the base plate having long holes longitudinally extending back and forth respect to the helmet shell, and supported to be slidable back and forth by guide axes passing through the long holes and supported about an axis at the helmet shell.

Preferably, the supporting part provides an axis supporting part supported about an axis to be rotatable about an axis extending in the right and left direction of the helmet shell.

There is an open-helmet which provides a mounting device of the microphone.

Such the features may result in the following effects in the present invention. Specifically, the mounting device, formed with foamed synthetic resin materials generating repulsive resilience against deforming stress to cover from around the mouth of a wearer to one or both of the left and right sides of the helmet shell configuring the outmost layer of the helmet, may prevent the MIC from misalignment or drop caused by wind or shake during driving or by careless touch on the MIC with a hand or a shoulder, and thereby properly take voice input from the MIC.

### BRIEF DESCRIPTION OF THE DRAWINGS

Fig. 1 is a side view of an open-face helmet which provides a mounting device according to an embodiment of the present invention;
Fig. 2 is a front view of the same;
Fig. 3 is a cross-sectional view taken along line (III)-(III) of Fig. 1;
Fig. 4 is a cross-sectional view taken along line (IV)-(IV) of Fig. 3;
Fig. 5 is a cross-sectional view of a mounting device according to the second embodiment of the present invention;

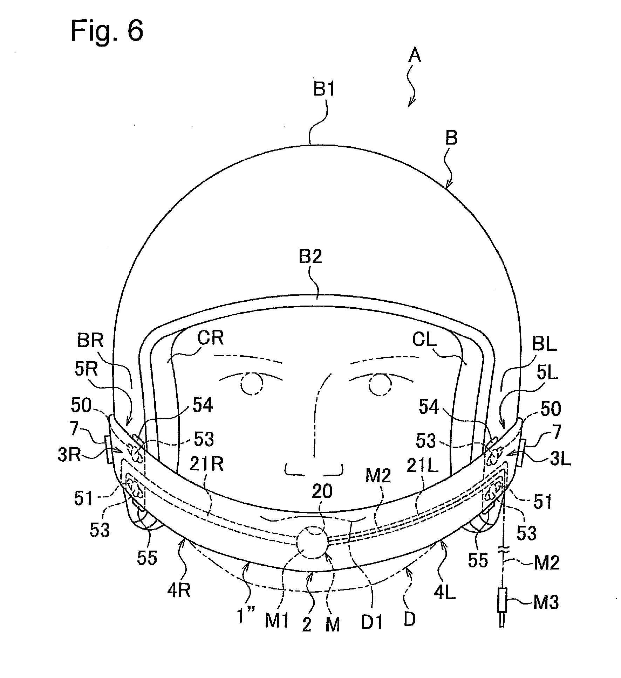

Fig. 6 is a front view of an open-face helmet which provides a mounting device according to the third embodiment of the present invention.

### DESCRIPTION OF THE PREFERRED EMBODIMENTS

An open-face helmet set forth below is one type of helmets to cover a wearer's head and cheeks but expose the wearer's face, and therefore half type helmets which covers only the head are not included.

A helmet shell set forth below configures the outmost layer of the open-face helmet, for example, molded to an open-face helmet shape from reinforced fiber resin materials (GFRP, CFRP and so forth) which is made by impregnating a reinforced fiber materials (glass fiber, carbon fiber and so forth) with a thermoset resin material (an epoxy resin material, a phenol resin material and so forth), or a thermoplastic resin material (polycarbonate and so forth).

The right and left set forth below means direction facing the wearer's cheeks, and back and forth means direction facing the wearer's back of head and face.

Foamed synthetic resin materials having deformation function for the wearer and generating repulsive resilience against deforming stress, and foamed synthetic resin materials having deformation function for the wearer and suppleness, which are set forth below, are exemplified with materials to foamed synthetic resin materials such as polyurethane, polystyrene, polyethylene, polypropylene, phenol resin, polyvinyl chloride, urea resin, silicone, polyimide and melamine resin.

Deforming stress set forth below is force causing bending deformation to the mounting device such as whip, warp and twist. Repulsive resilience against the deforming stress is force restoring the shape of the mounting device in original from the bending deformation such as the whip, warp and twist.

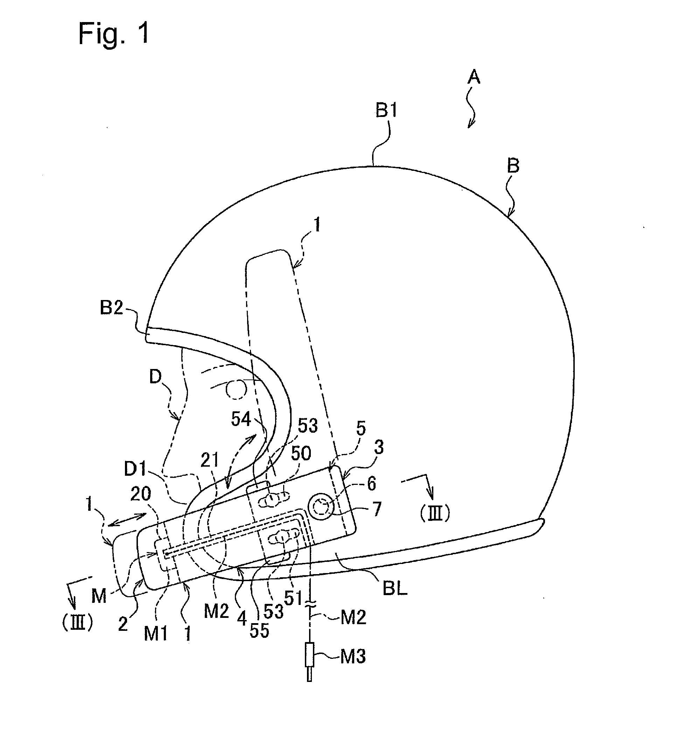

The following is description of an open-face helmet (hereinafter, "helmet") A which provides a mounting device 1 of the first embodiment in the present invention referring to the drawings, Figs 1-4. It should be noted that each embodiment set forth below does not limit the scope of the present invention.

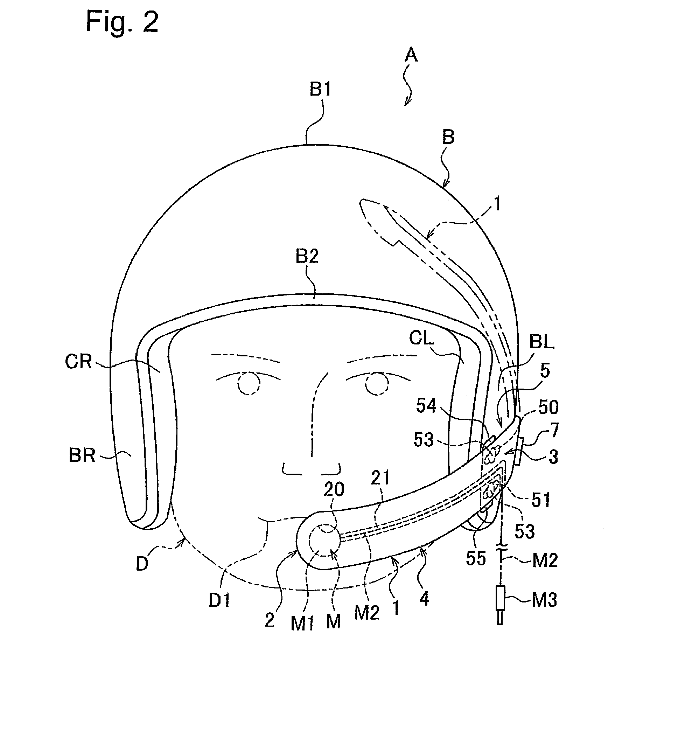

The helmet A provides an impact absorbing liner (not shown) molded with a foamed polystyrene material or a material having equivalent deformation function to the foamed polystyrene materials on the inner surface of the head B1 of a helmet shell B molded to the shape of an open-face helmet with a reinforced fiber material, a head pad (not shown) formed with such as an urethane material disposed inside the impact absorbing liner, cheek pads CL, CR (refer to Fig. 2) equipped to be removable on the inner surface of the right and left side parts BL, BR corresponding to the cheeks of the helmet shell B respectively, and a mounting device 1 supported about an axis at the left part BL.

In the mounting device 1, a mounting part 2 mounting the MIC body M1 of a microphone (herein after "MIC") M around the mouth D1 of the wearer D of the helmet A, a supporting part 3 supported about an axis by the left side part BL of the helmet shell B and an arm part 4 connecting the mounting part 2 with the supporting part 3 are integrally formed with a foamed synthetic resin material having deformation function for the wearer D and generating repulsive resilience against deforming stress to act on the mounting device 1 as well.

The mounting device 1, which supports a supporting part 3 about an axis at a base plate 5 supported to be slidable back and forth respect to the left side part BL of helmet shell B, is equipped to the helmet A by attaching the base plate 5 at the left side part BL of the helmet shell B. The mounting device 1 is formed in a shape to wrap around the supporting part 3 to the mounting part 2 via the arm part 4 so as to site MIC body M1 around the mouth D1 of the wearer D in state of the mounting device 1 equipped to the helmet A.

In the mounting part 2, a mounting hole 20 embedding and mounting the MIC body M1 of MIC M at the side of the wearer D and a mounting groove 21 embedding and mounting a line M2 connected to the MIC body M1 are formed.

The mounting hole 20 is formed in a shape embedding and fitting to the MIC body M1 not to be misaligned. The mounting groove 21 is consecutively formed adjacent to the mounting hole 20 in a shape embedding and fitting to the line M2 not to be misaligned. The mounting groove 21 is formed from the mounting part 2 to the bottom 30 of the supporting part 3 via the arm part 4 to take the embedded line M2 out of the mounting device 1 through the back end 30.

MIC M comprises the line M2, the MIC body M1 connected to the one end of the line M2 and a terminal M3 connected to the other end of the line M2, so that the terminal M3 is connected to a communication device.

Since an axis supporting part 6 is formed passing through in the depth direction in the supporting part 3, the mounting device 1 is supported about an axis to be rotatable about the supporting axis 7 respect to the base plate 5 by a supporting axis 7 passed through the axis supporting part 6 and attached at the base plate 5 piled on the supporting part 3 in the depth direction.

The arm part 4 extends from the mounting part 2 located around the mouth D1 of the wearer D to be formed in a bowed shape from the supporting part 3 supported at the left side part BL via the base plate 5 to the mounting part 2 located around the mouth D1 of the wearer D.

The base plate 5 is a plate-like body forming two, up and down, long holes 50, 51 opened in the depth direction and an axis supporting hole 52 opened about the same axis as of the axis supporting part 6, and steps 54, 55 are formed at the top and bottom edges of the base plate 5 to prevent the arm part 4 from rotating.

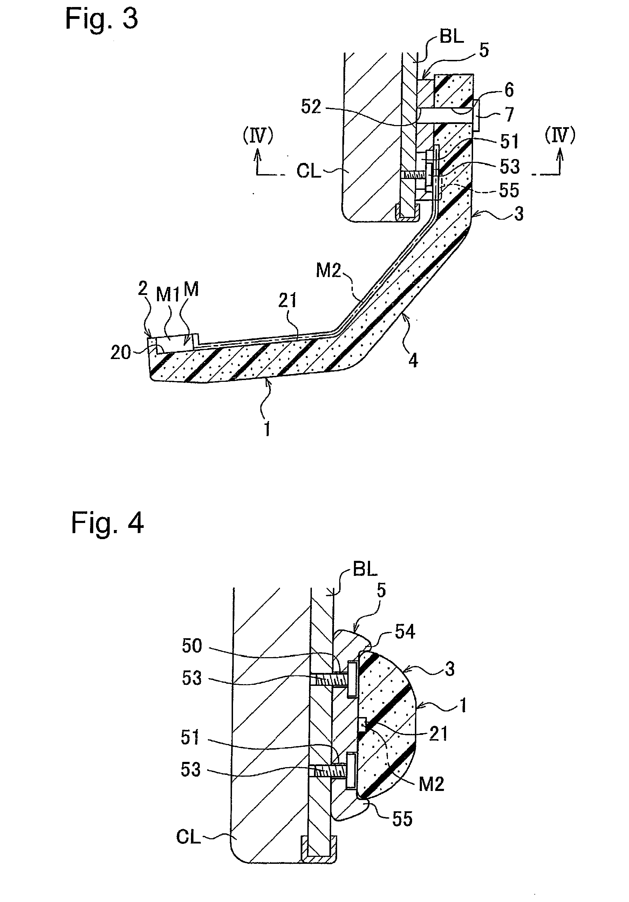

The steps 54, 55 are arranged in anterior area of the base plate 5 such that their back edges are located anterior to the supporting axis 7, and they prevent the arm part 4 from rotating during driving by maintaining the arm part 4 in state that the mounting part 2 is located around the mouth D1 of the wearer D (refer to the Fig.1) so as to sandwich the arm part 4 at its top and bottom as shown in the Fig. 4.

The axis of the supporting axis 7 is oriented in the right and left direction of the helmet shell B by piling such the base plate 5 on the left side part BL in the depth direction and arranging the long holes 50, 51 to longitudinally extend back and forth. Thus, the mounting part 2 may move between around the mouth D1 of the wearer D and the head B1 of the helmet shell B by the supporting part 3 rotating about the supporting axis 7 oriented in such axial direction.

The supporting part 3 supporting about an axis respect to the base plate 5 may prevent from rotating or shaking caused by wind or shake during driving, and moreover rotational resistance may be generated as much as the supporting part 3 rotates at ease.

The mounting part 2 may move toward the head B1 of the helmet shell B by rotating the supporting part 3 during bending and deforming the arm part 4 by hand such that the mounting part 2 moves outside the helmet shell B (in the direction apart from the helmet shell) while the supporting part 3 passes over the step 54 of the base plate 5 and further the mounting part 2 passes over the front edge B2 of the helmet shell B.

Also, repulsive resilience acts on the bent and deformed arm part 4 to return to the original shape when the hand releases it at the point that the mounting part 2 reaches at the head B1 of the helmet shell B, and the mounting part 2 is pressed against the helmet shell B by the repulsive resilience force. Thereby, it may prevent the mounting device 1 with the mounting part 2 located at the head B1 of the helmet shell B from rotating and shaking caused by wind and shake during driving.

The base plate 5 is supported about an axis by the left side part BL to screw a screw-like guide axes 53 to the left side part BL passing though the long holes 50, 51, and is slidable back and forth by loosening the guide axes 53. The mounting part 2 may move from around the mouth D1 of the wearer D toward apart from around the mouth D1 by sliding. Further, the base plate 5 may be taken out of the left side part BL for each mounting device 1 by taking the guide axes 53 out of the left side part BL.

The helmet A which provides such the mounting device 1 may prevent the MIC M from misalignment and drop caused by wind and shake during driving because the base plate 5 supported about an axis at the left side part BL supports the mounting device 1 mounting the MIC M about an axis.

Moreover, since the mounting device 1 is formed with a foamed synthetic resin material generating repulsive resilience against deforming stress acting to the mounting device 1, even if force acts to move the mounting part 2 apart from the mouth by wind or shake during driving or by careless touch on the mounting device 1 with a hand or a shoulder, the force may be released by bending and deforming the mounting device 1. Thus, the mounting device 1 may be prevented from such as breakage, misalignment and drop, and even if the mounting part 2 moves away from the mouth for a moment to bend and deform the mounting device 1, the repulsive resilience generated by bending and deforming moves the mounting part 1 back to the original place.

Therefore, the mounting device 1 may be prevented from such as breakage, misalignment and drop by bending and deforming resulted from careless touch on the mounting device 1 with a hand or a shoulder, and the repulsive resilience by bending and deforming may move the mounting part 2 back to around the mouth D1 so as to properly take voice input during driving.

Further, since the base plate 5 supporting the mounting device 1 about an axis is supported about an axis to be slidable back and forth respect to the left side part BL, the position of the MIC body is adjustable around the mouth D1 of the wearer D within the area defined by where the guide axes 53 is supported about an axis and by the length and width of the long holes 50, 51.

Further, since the mounting device 1 is supported about an axis to be rotatable respect to the base plate 5, it allows the mounting device 1 to move to the point where the mounting device 1 does not interrupt, e.g. the point where the mounting part 2 faces to the helmet shell B, by rotating the mounting device 1 when the helmet A is put on or taken off.

Further, when moving the MIC body M1 back to around the mouth D1 of the wearer D, by moving the mounting device 1 back to the point between the steps 54, 55 on the base plate 5 to rotate the mounting device 1 at the same time to move it toward the outside of the helmet shell B (apart from the helmet shell), it allows the mounting device 1 to maintain its position adjusted around the mouth D1 of the wearer all the time.

Further, since the mounting device 1 is formed with a foamed synthetic resin material having deformation function for the wearer D, even if the mounting device 1 contacts with the wearer D to heavily bend and deform, the contact does not affect the wearer because of the deformation function. Moreover, since the foamed synthetic resin material is relatively light-weight and inexpensive for its property, it allows the mounting device 1 to reduce its weight and cost for materials. And more, since the mounting device 1 is light-weight, it allows the helmet A to suppress increase in weight, and therefore, the wearer D may comfortably wear the helmet A.

Fig. 4 is a configuring diagram of a mounting device 1' in the second embodiment. Descriptions of regions overlapping to the mounting device 1 are omitted by designating the same signs.

The mounting device 1' is formed in a shape same as of the aforementioned mounting device 1, and a coating material 11 coats the mounting device 1' with foamed synthetic resin materials having deformation function for the wearer D and suppleness around a plate-like core material 10 formed with a rigid synthetic resin material generating the repulsive resilience against deforming stress over the supporting part 3 to the mounting part 2 via the arm part 4.

Such the mounting device 1' may be attached to the helmet A via the base plate 5 similar to the mounting device 1, and the same effects are expected as in the mounting device 1 by attaching to the helmet A.

Further, the mounting device 1' maintains its shape by rigidity of the core material 10 made of rigid synthetic resin materials, so that thickness of the mounting device 1' may be thinner than thickness of the aforementioned mounting device 1 as illustrated in a drawing.

Also, rigidity of the core material 10 may provide excellent durability against force by bending and deforming.

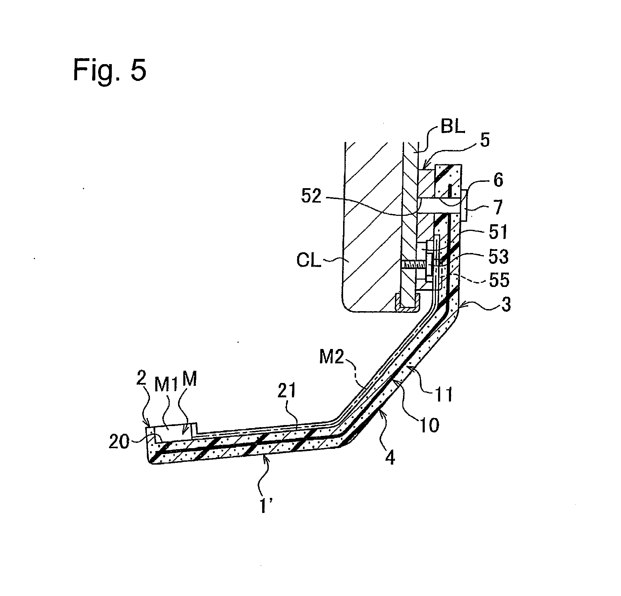

Fig. 5 is a configuring diagram of a helmet A which provides the mounting device 1" in the third embodiment. Descriptions of regions overlapping to the mounting device 1 are omitted by designating the same signs.

The mounting device 1" is formed to be attached over the left to right side parts BL, BR of the helmet shell B. The supporting part 3L supported at the left side part BL via a base plate 5L and an arm part 4L connecting the supporting part 3L with the mounting part 2 are formed at the left side of the mounting part 2 arranged in the center when seen from the wearer side, and a supporting part 3R supported at the right side BR via a base plate 5R and an arm part 4R connecting the supporting part 3R with the mounting part 2 are formed at the right side of the mounting part 2.

Also, two mounting grooves 2 1 L, 2 1 R are formed in the mounting device 1", the mounting groove 21 L linked to the left of a mounting hole 20 and the mounting groove 21R linked to the right of the mounting hole 20. Therefore, the line M2 may be taken out of the mounting device 1" through either of the right and left of the helmet shell B.

Such the mounting device 1" may be attached to the helmet A via base plates 5L, 5R similar to the mounting device 1, and the same effects may be expected as in the mounting device 1 by attaching to the helmet A.

A coating material 11 may coat the mounting device 1" with a foamed synthetic resin material around a plate-like core material 10 made of a rigid synthetic resin material as the mounting device 1'.

The mounting devices 1, 1' and 1" may be fixed immovable to the helmet shell B or be directly attached to the helmet shell B while siting the mounting part 2 around the mouth D1 of the wearer D. Also, the mounting devices 1 and 1' may be attached at the right side part BR.

ABS resin, hard and soft rubber materials may be exemplified other than the foamed synthetic resin materials as materials having deformation function for the wearer D and generating repulsive resilience against deforming stress. Herein, ebonite rubber may be exemplified as the hard rubber materials, and such as elastomeric rubber, urethane rubber and silicon rubber may be exemplified as the soft rubber materials.

Also, at least, the arm parts 4, 4L and 4R may be made of foamed synthetic resin materials in the mounting devices 1 and 1". Also, though the mounting device 1' in whole is covered with foamed synthetic resin materials, at least, the arm part 4 may be covered with foamed synthetic resin materials.

Having described specific preferred embodiments of the invention with reference to the accompanying drawings, it will be appreciated that the present invention is not limited to those precise embodiments, and that various changes and modifications can be effected therein by one of ordinary skill in the art without departing from the scope of the invention as defined by the appended claims.

## Claims

1. A microphone mounting device for mounting a microphone (M) around the mouth of a wearer of an open-face helmet (A),
wherein the mounting device (1) is arranged so as to cover from around the mouth (D1) to one or both of the left and right sides of a helmet shell (B) configuring the outmost layer of the open-face helmet (A), **characterized in that** the mounting device (1) is formed with a foamed synthetic resin material generating repulsive resilience against deforming stress and having deformation function for the wearer (D) such that the wearer (D) can bend and deform it by hand and it returns to an original shape on hand release by the wearer (D).

2. The microphone mounting device according to Claim 1, the mounting device (1) comprising:
a mounting part (2) mounting the microphone (M) around the mouth (D1);
a supporting part (3) supported at one or both of the left and right sides of the helmet shell (B); and
an arm part (4) connecting the mounting part (2) with the supporting part (3),
wherein the mounting part (2), the supporting part (3) and the arm part (4) are integrally formed.

3. The microphone mounting device according to claim 1 comprising:
a mounting part (2) mounting a microphone (M) around the mouth (D1) of a wearer (D) of an open-face helmet (A);
a supporting part (3) supported at one or both of the left and right sides of a helmet shell (B) configuring the outmost layer of the open-face helmet (A); and
an arm part (4) arranged between the mounting part (2) and the supporting part (3),
wherein the mounting part (2), the supporting part (3) and the arm part (4) are formed with a material generating repulsive resilience against deforming stress and are covered with a foamed synthetic resin material having deformation function for the wearer (D) such that the wearer (D) can bend and deform the arm (4) by hand and it returns to an original shape on hand release by the wearer (D) and suppleness to integrate the mounting part (2), the supporting part (3) and the arm part (4).

4. The microphone mounting device according to Claim 2 or 3, wherein the supporting part (3) is supported at a base plate (5), the base plate (5) having long holes (50, 51) longitudinally extending back and forth respect to the helmet shell (B), supported to be slidable by a guide axis (52) supported about an axis at the helmet shell (B) passing through the long holes (50, 51).

5. The microphone mounting device according to one of Claims 2 through 4, wherein the supporting part (3) provides an axis supporting part (6) supported about an axis to be rotatable about an axis extending back and forth of the helmet shell (B).

6. An open-face helmet providing the microphone mounting device (1) according to one of Claims 1 through 5.

## Patentansprüche

1. Mikrofonhalterungsvorrichtung zum Haltern eines Mikrofons (M) um den Mund eines Trägers eines gesichtsfreien Helms (A),
wobei die Halterungsvorrichtung (1) angeordnet ist, um von um den Mund (D1) bis zur linken und/oder rechten Seite einer Helmschale (B) zu reichen, welche die äußerste Schicht des gesichtsfreien Helms (A) ausgestaltet, **dadurch gekennzeichnet, dass** die Halterungsvorrichtung (1) mit einem geschäumten Kunstharzmaterial hergestellt ist, das abstoßende Rückstellkratt gegen Verformungsbeanspruchung erzeugt und eine Deformationsfunktion für den Träger (D) hat, so dass der Träger (D) es von Hand verbiegen und verformen kann und es bei Loslassen durch den Träger (D) aus der Hand in seine Ausgangsform zurückkehrt.

2. Mikrofonhalterungsvorrichtung nach Anspruch 1, wobei die Halterungsvorrichtung (1) Folgendes umfasst :
ein Halterungsteil (2), das das Mikrofon (M) um den Mund (D1) haltert,
ein Lagerungsteil (3), das an der linken und/oder der rechten Seite der Helmschale (B) gelagert ist, und
ein Armteil (4), das das Halterungsteil (2) mit dem Lagerungsteil (3) verbindet,
wobei das Halterungsteil (2), das Lagerungsteil (3) und das Armteil (4) einstückig ausgebildet sind.

3. Mikrofonhalterungsvorrichtung nach Anspruch 1, die Folgendes umfasst :
ein Halterungsteil (2), das das Mikrofon (M) um den Mund (D1) eines Trägers (D) eines gesichtsfreien Helms (A) haltert,
ein Lagerungsteil (3), das an der linken und/oder der rechten Seite einer Helmschale (B) gelagert ist, welche die äußerste Schicht des gesichtsfreien Helms (A) ausgestaltet,
ein Armteil (4), das zwischen dem Halterungsteil (2) und dem Lagerungsteil (3) angeordnet ist,
wobei das Halterungsteil (2), das Lagerungsteil (3) und das Armteil (4) mit einem Material ausgebildet sind, das ein abstoßendes Rückstellvermögen gegen Verformungsbeanspruchnng erzeugt, und mit einem geschäumten Kunstharzmaterial überzogen sind, das eine Deformationsfunktion für den Träger (D), so dass der Träger (D) den Arm (4) von Hand verbiegen und verformen kann und er bei Loslassen durch den Träger (D) aus der Hand in eine Ausgangsform zurückkehrt, und Biegsamkeit zur Integration des Halterungsteils (2), des Lagerungsteil (3) und des Armteils (4) miteinander hat.

4. Mikrofonhalterungsvorrichtung nach Anspruch 2 oder 3, wobei der Lagerungsteil (3) auf einer Grundplatte (5) gelagert ist, wobei die Grundplatte (5) Langlöcher (50, 51) hat, die sich in Bezug auf die Helmschale (B) längs nach hinten und vorn erstrecken, wobei sie von einer Führungsachse (52) gleitfähig gelagert wird, die um eine Achse an der Helmschale (B) gelagert ist, die durch die Langlöcher (50, 51) verläuft.

5. Mikrofonhalterungsvorrichtung nach einem der Ansprüche 2 bis 4, wobei der Lagerungsteil (3) einen Achsenlagerungsteil (6) bereitstellt, der um eine Achse gelagert ist, um um eine Achse drehbar zu sein, die sich von der Helmschale (B) nach hinten und vom erstreckt.

6. Gesichtsfreier Helm, der die Mikrofonhalterungsvorrichtung (1) nach einem der Ansprüche 1 bis 5 bereitstellt.

## Revendications

1. Dispositif de montage de microphone pour monter un microphone (M) autour de la bouche d'une personne portant un casque semi-intégral (A),
le dispositif de montage (1) étant agencé de sorte à couvrir un espace à partir de la zone autour de la bouche (D1) vers l'un des côtés, soit le côté gauche soit le côté droit, ou vers les deux côtés d'une carcasse de casque (B), configurant la couche située le plus à l'extérieur du casque semi-intégral (A), **caractérisé en ce que** le dispositif de montage (1) est formé à l'aide d'une matière en mousse de résine synthétique laquelle génère une résilience de répulsion contre les contraintes de déformation et procure au porteur (D) une fonction de déformation, de sorte que le porteur (D) peut le courber et le déformer à la main, alors qu'il revient à sa forme initiale lors du relâchement manuel par le porteur (D).

2. Dispositif de montage de microphone selon la revendication 1, le dispositif de montage (1) comprenant :
une partie de montage (2) servant à monter le microphone (M) autour de la bouche (D1) ;
une partie de support (3) soutenue au niveau de l'un des côtés, soit le côté gauche soit le côté droit, ou au niveau des deux côtés de la carcasse de casque (B) ; et
une partie bras (4) laquelle raccorde la partie de montage (2) à la partie de support (3),
cas dans lequel la partie de montage (2), la partie de support (3) et la partie bras (4) sont formées d'un seul tenant.

3. Dispositif de montage de microphone selon la revendication 1, comprenant :
une partie de montage (2) servant à monter un microphone (M) autour de la bouche (D1) d'un porteur (D) de casque semi-intégral (A) ;
une partie de support (3) soutenue au niveau de l'un des côtés, soit le côté gauche soit le côté droit, ou au niveau des deux côtés d'une carcasse de casque (B), configurant la couche située le plus à l'extérieur du casque semi-intégral (A) ; et
une partie bras (4) laquelle est agencée entre la partie de montage (2) et la partie de support (3),
cas dans lequel la partie de montage (2), la partie de support (3) et la partie bras (4) sont formées à l'aide d'une matière générant une résilience de répulsion contre les contraintes de déformation, et sont recouvertes d'une matière en mousse de résine synthétique laquelle procure au porteur (D) une fonction de déformation, de sorte que le porteur (D) peut courber et déformer manuellement le bras (4), alors qu'il revient à sa forme initiale lors du relâchement manuel par le porteur (D), ainsi que la souplesse afin d'intégrer la partie de montage (2), la partie de support (3) et la partie bras (4).

4. Dispositif de montage de microphone selon la revendication 2 ou 3, la partie de support (3) étant soutenue au niveau d'une plaque de base (5), la plaque de base (5) comportant des trous longs (50, 51) lesquels s'étendent dans le plan longitudinal en arrière et en avant par rapport à la carcasse de casque (B), soutenue de façon à pouvoir être soumis à un coulissement par un axe de guidage (52) soutenu autour d'un axe au niveau de la carcasse de casque (B) passant par les trous longs (50, 51).

5. Dispositif de montage de microphone selon l'une quelconque des revendications 2 à 4, la partie de support (3) procurant une partie de support d'axe (6) soutenue autour d'un axe en vue de pouvoir tourner autour d'un axe s'étendant en arrière et en avant de la carcasse du casque (B).

6. Casque semi-intégral offrant le dispositif de montage de microphone (1) selon l'une quelconque des revendications 1 à 5.
